# EUROPEAN PATENT APPLICATION

(11) **EP 3 907 686 A1**
(43) Date of publication of application: **10.11.2021**
(21) Application number: 21169326.2
(22) Date of filing: 30.06.2015
(51) Int. Cl.: G06Q 30/04, G09C 1/00

(54) **IMPROVED CLIENT ENTRY AND MAINTENANCE SYSTEM FOR TIMEKEEPING AND BILLING FOR PROFESSIONAL SERVICES SYSTEM AND METHOD**

(30) Priority: 30.06.2014 US 201461998577 P; 29.06.2015 US 201514756630
(62) Divisional of application: 15814073.1
(71) Applicant: Shaaban, Ahmed, Farouk, Chicago, IL 60601 (US); Thandra, Venkat, Chicago IL 60601 (US)
(72) Inventor: Shaaban, Ahmed, Farouk, Chicago, IL 60601 (US); Thandra, Venkat, Chicago IL 60601 (US)
(74) Representative: Cabinet Beaumont

(57) **Abstract**

The present invention consists of an improved billing system for professional companies and firms with enhanced handing of all client data including names, addresses, websites, phone numbers, fax numbers and the like. The present invention can also track mergers and acquisitions of clients, write offs, taxing structure for bills, and it may display client data according to the security level or staff function of the person attempting to access the data. It can provide mass discounts on bills, and store various client feearrangements which are linked to the client data. In many ways the efficient handling of numerous fields of client data information is improved.

## Description

### PRIORITY CLAIM

The present application herewith claims priority of Provisional App. No. 61/998,577, which was filed June 30, 2014, and shall be considered as if fully set forth herein.

### Field of the Invention

The present invention relates to the field of improved timekeeping and billing systems used in professional companies and firms such as legal, accounting, architectural and engineering, et alia, as well as consulting companies and firms, and more specifically it relates to the area of a flexible and improved client entry and maintenance system and method.

### Background of the Invention

In the current marketplace, there are a variety of computerized time and billing systems for professional firms which are marketed under the following Trademarks: Timeslips by Sage, BillQuick, Clio and others. Some of these systems are computer based while others operate primarily in a cloud computing environment. These systems, however, are not suited to large law firms and professional firms having a global presence, with multiple offices in a plurality of countries which must be linked together for proper billing and financial management. In addition, these are basic programs which do not contain the most up to date features such as transmissions by text, email, fax, computer voice calling, and social media announcements and billing. Other numerous and varied disclosures related to billing and timekeeping are also disclosed in the prior art as shown below.

EP 1,145,162 issued to Ashby discloses the use of a System for processing credit applications, financial and insurance services and administrative and management tools. The System will generate a price quote for insurance and finance and facilitate on line credit application processing. It will further provide detailed reports for finance, insurance inventory, tracking and other administrative matters. It will provide quick quotes for a lease or loan. It will also perform: inventory tracking, insurance tracking, purchase tracking, applicant profiling, targeted marketing, customer satisfaction, etc. The system will collect data for credit, a description of the item being sold, insurance will be offered for the item, licensing and data required for the government will be collected.

Ashby also discloses that the User can be a financial institution, a dealer, manufacturer, insurer or supplier. It can utilize and store credit agreements with customer ratings and interest rates which can be bundled and sold on a public exchange. FAQ's can be provided in the system, and it can provide Quick Quotes on the spot to the consumer. However, this disclosure is directed to car sales and insurance, not timekeeping. The terms it stores are contract terms, contract ID, customer ID, buy rate, the sales rate, dealer markup, payments, cash down, trade in value, lease fee, monthly payments, commission and taxes due. However, Ashby does not relate to professional timekeeping or billing.

EP Patent No. 1,769,452 issued to Allin discloses the use of a computerized system for residential and commercial construction projects tomaintain and disburse construction draws during construction. It can track lien waivers, and can prepare, approve, sign and distribute hundreds of checks to subcontractors each month. It also tracks construction change orders. It can manage all of the persons involved in each draw. It manages and generates a construction budget and time line. It also manages payments to material suppliers. It can manage and store the inspection data for each project. It can manage budgets for GC's as well as the subs. It handles ACH payments. Template forms are utilized to facilitate the draw process. Notices can be sent by email, text orvoice.

EP Patent No. 2,026,222 issued to Alquier discloses the use of a system and method which allows the addition, modification and deletion of data base fields dynamically without the use of a data base administrator. The system allows the addition and modification of an informational structure dynamically distributed directly via the user interface. It supports different types of entity attributes including, text, numerical information, date and time, predefined values and binary objects, allows the creation of relational dependencies between information entities (e.g., patent/child), provides flexible reporting capabilities including spreadsheets, slides, documents, timelines, etc.; it allows a configurable data entry interface; it allows importation of data from external sources; it allows full text searches; logs modifications for an audit trial (important for pharma and med devices); includes email notifications. It allows for a user interface that is flexible and configurable. The system uses template items, coding and tables to accomplish these purposes. However, it is not directed toward time tracking and billing generation.

U.S. Patent Disclosure No. 2003/0120538 filed by Boerke, et al. discloses the use of a method for tracking progress on a task by dividing the period of time into a plurality of timeslots and determining a target number of subtasks to be completed during each timeslot. For example, the time slots may be divided into 15 minute increments. The system only tracks the number of subtasks completed for each timeslot. The method also keeps track statistically of variances in subtasks completed between workers. The task may include any type of work. The process may be used for planning purposes, i.e., as a planning tool such that management can plan and process daily or monthly work shifts according to the work to be done for particular tasks and subtasks. This helps a supervisor spot and correct negative variances in worker performance. The progress can be logged into a computer or worksheet or in paper format. Problems are also noted by the method for correction to improve performance by variance cards.

U.S. Patent Disclosure No. 2013/00090968 filed by Borza, discloses the use of an employee management and scheduling method which is directed to ensure that adequate personnel are present as required and that statutory requirements are met and costs are tracked and minimized. The Borza disclosure is also directed atapps for management cell phone usage wherein managers can track employees, their shifts and their skills and managing same. This allows for real time changes by employees that are sick or have not shown up for work. The locations may also be tracked. Scheduling software is used to manage multiple employees at multiple locations. From one screen, a manager may create, edit and delete shifts and also have access to other aspects of managing the organization staffings with information about positions, teams, skills, etc. being provided. The System can print Shift Assignment Reports and Employee Reports. However, this disclosure is directed toward scheduling employees and not tracking their time or billing for theirtime.

U.S. Patent Disclosure No. 2012/0233044 filed by Burger, et al., discloses the use of a Method and System for labor project management and costing which may run on a cell phone app to monitor employee activity, identify faulty activity and manage allocation of labor resources. The app, as installed on an employee cellphone, allows the employee to travel to various job locations and record the activities at each job location. The employee may log into or out of the timeclock app installed on the employee's cellphone. The system can be used to monitormanagers and administrators as well as employees. The system can be used to transmit payroll information. A flag may be generated if the worker travels outside the permissible areas allocated to his role. The system stores employee photos, job locations, routes, job codes, SIC codes, etc. may be entered into the back end by an administrator. The system also generates reports, and has a" Dashboard" or summary reportsimply show who is on the job, what time they arrived and GPS confirmation of location. The LPM platform may also be operated in the Cloud.

U.S. Patent Disclosure No. 2014/0258057 filed by Chen discloses the use of a system and method for tracking the User's time of a mobile device for the purpose of billing clients. The system is provided with a digital timer which is launched at the time of arrival and then stopped when the employee leaves. The system is directed at tracking time on a mobile device or app. It tracks time sending texts and emails. Time is recorded as soon as the professional receives a voice mail, phone call, text oremail. The user can also input notes with the system's time recording and entry. The app automatically looks up in the user's contacts list whether the call or email or text coming in is from a client, and if so, it begins to track it for billing purposes. If not in the contacts registry, the user is alerted at the time and can add the contact as a client to be billed.

U.S. Patent Disclosure No. 2013/0290154 filed by Cherry, et al. discloses the use of the system and method to manage employees at a plurality of jobsites by providing a database wherein a set of job site data is stored therein. Employee devices may collect a set of time punch data and photos to store in the system. Management apps are used on supervisory devices to monitor the job site data and employees and validate photos and activate employee apps. This system is shown operating on a Cloud environment. The app will operate with a web browser, WiFi or on GPS authentication. The system essentially operates as a time tracking system for job sites. The system stores time photos of the employees at check in and check out. The system also records a job number, a job phase and a cost code. The system also has a payroll calculator communicating with a payroll service.

U.S. Patent Disclosure No. 2001/0042032 filed by Chrawshaw discloses the use of a system for capturing, processing and reporting time and expense data which can include flat fee billing, maximum fee billing and will also allow for discounts and write offs. It can be used for a wide range of businesses. A client will not have access to internal data of the company. The system will produce bills, expense reports, time sheets, proposals and project tracking. This appears to be a conventional program for law firm data which is run on a local server for one location. The system may produce various reports as needed. Bills may be delivered by email. The program will create envelopes for the bills. The system will also create budgets for the client.

US Pat. No. 6,038,547 issued to Casto discloses the use of a construction tracking and payment system for use by contractors and subcontractors so that work may be tracked and payment may be timely made after the work is completed and inspections performed. The system complies with AIA requirements. The system may be implemented on a handheld computer. The system will break down a construction job into various elements, and then a contractor or subcontractor will be given a copy of how the site is partitioned, then each contractor or sub isresponsible for submitting applications using the partitioning to ensure uniformity the architect desires to impose. The system can import and use CAD information on the job site. The system uses coding approved by the AIA.

US Pat. No. 6,747,679 issued to Finch, II, et al. discloses the use of a time keeping and expense tracking server including a server that implements computer instructions that define logic for building GUI screens according to user instructions. The user can implement and design the screens needed for the tasks of time keeping and expense tracking. The system may be implemented on the Cloud or Internet with a laptop or wireless device desired. The GUI screen may be customized on a company by company basis, a department by department basis, etc. The system also includes security wherein projects and project codes are only viewable by certain level employees.

US Pat. No. 7,343,316 issued to Goto, et al. discloses the use of a network based shift scheduling system for generating temporary shift workers. It is sent over portable terminals over a network. The system is set to secure and provide work for a plurality of workers. Workers can also submit cancellations or shift changes via the system. The system also accommodates email for communication purposes. The system may also recruit new employees. The system stores the name, age, sex address, mail address and qualifications of the employee, the workable time slots, the type of job, hourly wage, etc.

WPO 2014/016796 filed by Gupta, et al. discloses the use of a system and method for employee tracking in a mobile communication device wherein dynamic location reports may be generated in real time or near real time. The system is directed to door to door delivery or pickup sales forces. The System uses a mobile app on the employees cellphone to conduct the tracking of the employee. The system will raise flags if deviations from tracking occur. The system uses Blue Dophil software to analyze where employees should be performing tasks and produces flags when parameters gathered fall outside permissible ranges. These flags are sent to management via text or email.

US Pat. No. 6,832,176 issued to Hartigan, et al. discloses the use of a method and system for tracking and reporting time spent on tasks in different application on the end users' computers while the tasks are being performed. It may track the opening and closing of files automatically and send reports and messages directly to and from other applications. The software may also suggest categories for each task based upon at least one criteria. The system may use MS Outlook for assistance in tracking tasks and transmitting reports. It is directed toward attorneys and accountants. The system may track fixed fees and use data collected for evaluating production or sweat equity bonuses to employees. The system may track a plurality of projects or research endeavors. It can track the time spent by accountants on spreadsheets. It can track the time engineers spend on designing computer code or simulating circuit designs, etc. It mentions the use of Timeslips for professional time tracking and TABS 11 for tracking other professional time spent on tasks and projects. The system tracks timeon computers used by the professionals involved. The system presents toolbarsto assist in tracking time. The system will track time spent in applications such as MS Word, Excel, Outlook, Power Point, etc. It will track when the application is open, active and then closed. It can score and rate the usage of these various types of software automatically. Various reports may be generated by the system for management usage on a periodic basis, as desired.

WPO Patent Disclosure No. 2015/079776 to Hishiki discloses the use of a work state management system that manages clock in times for drivers of vehicles that work overnight shifts and calculates the appropriate breaks for the driver so that the driver is not over tired.

U.S. Patent Disclosure No. 2014/0344,122 filed by Hodgin, discloses the use for billing for time spent in an IM session by a service person wherein the system can automatically bill a project/client by searching for the name of the client or project within a text or instant message or a series or session of same. If the system cannot find the name of a client or project, then the user will associate the IM session with a new project or client so that the client may be billed for the IM session with the client. Or the System may default into a common template for the User's typical instant messaging sessions.

U.S. Patent Disclosure No. 2009/0006228 filed by Hodgin discloses the use of a time tracking system and method similar to the IM system noted above by Hodgin. The Hodgin system will also store a list of prior associations to Projects and Clients that are built on the same or similar words and phrases.

U.S. Patent Disclosure No. 2002/0154122 filed by Jackson, Jr. discloses the use of an improved system for employers, referral agencies, consultants and independent contractors to hire and manage employees and provide tax reports and wage reports. The Jackson, Jr. System may track and manage employees, salaries and experience to provide optimal benefits to the employer. The System produces computerized scheduling, billing, record keeping and payment templates. It provides a listing of invoices for the User to refer to. It consists of providing invoices for contractor services and performs its functions in a cloud based system.

US Pat. No. 8,838,486 issued to Kong, et al., discloses the use of a time manager interface on a communications display device which allows a workerto keep track of her or his time and activities. The time manager keeps track of time spent logging into and out of the system. This was important in years past when boot time were quite long. It discloses the use of scanning in employee badges to track work time. This disclosure is directed toward a system for checking work in and work out time. In one version of an embodiment, the System is located in the field. It discloses the use of GPS in the field to create an audit trail of time worked. Biometric information may be used for the system to identify the worker. It can be used nationwide for multiple local offices. It may be coupled to communicate with employee hand held devices. It can work over WiFi and cellular networks. It can store: DOB, SSN and other employee details. It can be used with a barcode or QR code. It can be used in connection with microphones, cameras and scanners. For remote sites, the system can check the IP address of the computer or hand held device to ensure security in the system. The system can also be used to check work schedules to lock an employee out of the system when not scheduled. When an employee arrives at a worksite, upon verification, one or more emails or text messages may be sent to management for that site. Employees may view the work schedules of other employees if granted permission to do so. In doing so, employees can request work dates and exchange them with others. The system can differentiate between exempt and non exempt employees. The system can display messages to employees during time in and time out registration.

U.S. Patent Disclosure No. 2012/0278211 filed by Loveland discloses a system for remotely tracking and monitoring Worker's activities via mobile phones or other mobile tracking devices. This system monitors continuously whether or not a worker is present at a worksite.

WPO 2010/11652 filed by Manser discloses a System and Method for tracking employee performance. The Manser system provides a user interface to allow the user to assess the balance of hard skills and soft skills of an employee, evaluate the employee's performance in a plurality of categories and compare the average cost for the job in the marketplace to the cost of the employee being evaluated. The system also analyzes the average cost of a similar job in the relevant marketplace during employee reviews. The program continually monitors the value of an employee to the employer to determine ROI at any given time. The system can be applied to direct hires, contractors, temps or any employee relationship. The system allows the identification of both over achievers and under achievers. The system provides a means by which employees may determine how to get the highest ratings via their work efforts.

EP 2338293 filed by Molotsi discloses a system for time tracking for employers on a mobile computing device. The system involves providing an event manager on a mobile computing device for managing a plurality of events which are then synchronized to a server. The system will automatically track time and estimate time spent on a task by the worker. This system logs events in the user's calendar, in emails and texts. Timestamps for events and mapping for the events are provided. A client list and data may be provided in one or more files or databases. The system may communicate with a worker's smartphone. The user may be able to open, edit, delete, review or manage all automatically created event records. The system may use information in the text, email, and calendar to automatically create a time tracking record for the user. In addition, the system may automatically convert emails, texts, meetings on a calendar to a time tracking event by means of a pop up box to the user.

WPO 2008/061146 filed by Neveu Holdings, LLC discloses a system and method for remote time collection for employee time on job sites. The system can collect an employee's name, picture, title, contact information, health and/or safety information, skill information, etc. The system can also collect for each employee a project name, project identification, location, project start date, project supervisor and detailed comments about project activity. The system can also collect information on vendors, such as name, address, phone, contacts and type of vendor. The system can also use GPS information and compare it with when the employee is supposed to work. The system collects biometric information to identify an employee. In one embodiment, a time collection database is configured to receive, process and store information related to projects such as name, identification, location start date, supervisor, etc; vendor's name, address, number contact, subcontractor type, etc. project supervisors, tasks, employee titles, departments and employee time records. Office data collection may include: job site, task and project information via a wireless connection. Encryption is used to transmit data to and from the remote site. The system may also include a field scheduling module to schedule a job for a particular jobsite and for a specific remote user(s). The user can edit hours and view comments from remote workers. Remote monitoring can record task completion, view management comments and ask for management assistance and crew responsibilities.

U.S. Patent Disclosure No. 2015/0081381 filed by Okoba discloses a system and method for recording time which may be used on a device, software or application. It may be used by logging into a plugin or extension. The time recorded may be exchanged for vouchers which may be redeemed or traded with other members. A user will register with an ID and password to log into the system. The system may record device activity, software activity, application activity, keyboard activity and mouse activity. The user's time spent in the browser or on a video game may be given a redeemable value. A database may store the recorded activity for further analysis. The system will work on computers, tablets, cell phones, television, games, digital books, exercise apparatus, web browsers, mobile apps and video games. Vouchers may represent monetary value, promotions, products or services. User name and password may be stored in system cookies. The system can capture videogame or browser activities, keyboard or mobile keyboard activities. The activity spent in the system may translate to purchasing power so that the user may receive optimized value from their activities and the system may deliver purchasing incentives at the right time and place and for the right product or service. A business maybe selected as a favorite from user activity on the system.

U.S. Patent Disclosure No. 2015/0081487 filed by Porter, et al., discloses the use of a time tracking and productivity system including a tracking component to locate an employee to record time spent at various locations. This system is designed to monitor and improve coordination of patient care, and in particular, to limit the number of patient hours a resident physician can work per week. When the rules implemented by the ACGME are violated, strict fines and probations or suspension may be implemented. This system is primarily concerned with tracking an employee's location and work hours. This system can include cloud performance. It is the movement of an employee within predetermined boundaries that will trigger the recording of anew event. It can track time in a patient's room, a brake area, doing paperwork, etc. A GUI is used on handheld devices. The system can also use tags that interact with RF signals. The system records employee info and FRIDA numbers, the resident program director, the resident coordinator, start and end times for resident shifts, house calls, hospital room calls, night float, etc. If moonlighting is permitted, the system can track moonlighting hours as well. It will store vacation schedules and rotation schedules. The shift log can include a short trip buffer. Automatic warnings of over limit hours are sent to management for the residents via text, phone, email, etc.

US Pat. No. 6,185,514 issued to Skinner discloses a method and system for automatically collecting and analyzing information regarding time and work performed on a computer. It uses a data collector for monitoring certain portions of a worker's computer activity and an analyzer for showing which portions of the activity were continuous work activities, and the system will categorize the work into preset projects and tasks within a project. The information is periodically written to data storage. The system is directed toward telecommuters. The system automatically excludes time where there was no activity on a computer. The system is used to forecast future projects with reduced financial risk. The system includes the automatic documentation of time. The data stored on the system is encrypted so that it cannot be altered by the user. The data collector automatically collects the activity on a mouse and on the keyboard of the computer user. The system creates a log file of work activity. A hardware abstraction layer can interface with phones and other devices and can be used with pointing devices such as a tabled or mouse. The system keeps track of activities within open multiple windows on a computer.

US Pat. No. 8,209,243 issued to Smith, et al., discloses the use of a system for performing real time labor management and timesheet reporting which is adapted to wirelessly transmit timesheet information. The portable devices may be dedicated to tracking time only and cannot perform other computing functions. The system includes a portable electronic punch system that is capable of communicating with the labor management system via text. The system allows user to manage work schedules and report timesheet information without requiring an internet accessible computer. The units send timesheet information directly back to the server for analysis via wireless network. The text messages may contain: employee ID, clock in time, clock out time, break times, days worked, days off and other work related information. New user information may be set up by text message into the timekeeping system. The system may operate over any wireless system, i.e., GSM, GPRS, CDCP, Bluetooth, Wifi, etc.

US Pat. No. 9,020,848 issued to Ridge, et al., discloses the use of a method for tracking time and location of an employee according to a predefined schedule and it may utilize software to track the presence or non presence of: a NFC (near field communication), BLE (Bluetooth Low Energy) or other wireless device. The system will track the presence of an employee in a geofenced area. It will also track employee time and other data to log that into a payroll system. The low energy device then communicates data to a server if a signal could or could not be detected. It will also allow for manual clocking in and out in case of failure of the back end server. The system can also be used for security purposes. The system can function in real time or in batch request mode. The information may be a time stamp, a status or location of a mobile device. In one embodiment, the system can be used for employees for a retail store or restaurant. The system can utilize Bluetooth tapping to log in. It may be used at a trade fair both by tapping the device to a NFC communicator. It maybe used in connection with a mobile time clock app. It can be used to advise management when non authorized employees enter a restricted work zone. Management may input which work zones are restricted and which are not.

WPO Disclosure 2015/029073 file by Shirish discloses a system and method to measure aggregate and analyze time, effort and productivity by reviewing time spent on activities such as calls, travel, lab work, meetings, discussions and remote visits. PD's or Presence Devices may be used to track employee location. The system can track average daily work patterns. It can track work activities and private activities. It can track emails and browsing. It can account for flexible work hours, use of multiple and different types of computing environments (PC at work and home, smartphones, tablets, etc.) It can capture files, folders, web links, etc. It can make all personal endeavors password protected and private. It is intended to track effort and performance 24/7. It can provide modules that promote work focus and minimize distraction by awarding performance points, badges for consistent performance and progress in performance goals. It can measure improvement by creating an n-dimensional effort data cube and include analytics for custom reports. The system can go into self improvement mode to set goals for self improvement and activities related thereto. It can be used at work whenever and where ever. It has a time tracker for all online time. It has a Merger to merge offline and online time effort mapping. It has an interference engine to determine Work Patterns for employees, leave taken, work done on holidays, desk or supervisory or travel oriented job, etc. The System will also present organization goals and analytics, top performers, work patterns, recent deviations from work patterns. A Collector module measures data to improve the exact work effort at the individual level throughout the day. The System can be used on SAS (Software as a Service) and it maybe hosted in a cloud-computing environment.

U.S. Pat. No. 2012/0173297 A1 disclosed by Styn, et al., a method and system for task tracking and allocation is disclosed. The disclosure provides for a method in which an individual may create a set of instructions operable to perform a set of tasks in a computer readable medium. That set of tasks may comprise maintaining a database, generating a first interface displaying subjects associated with individual issues, and a second interface with notes specific to an issue selected by a user. The instructions stored in the database may be implemented accordingly and the computer may maintain a plurality of relationship records containing data indicating relationships across folders. The disclosure also mentions the prior use of MS Project and ERP systems that employ Gantt charts, milestones and tasks and subtasks with complex dependencies. This system keeps track of billable items. However, Van Styn is not a true timekeeping and professional billing system.

US Pat. No. 2014/0108644 A1 disclosed by Zaents, et al., a method and system for tracking time in a web-based environment is disclosed. The method of tracking time involves a web-based application to track time associated with several records. Identifying a record in an active state, generating a record associated with the active record and activating a timer, and having the ability to end the session in response to an indication that the record is an inactive state. The time-tracker may be hosted in a cloud-computing environment. The time-tracker may calculate the entire duration of the record by continuously adding the active times together. The method may detect a predetermined total duration of time has been exceeded and provide such indication to user. This disclosure mentions timekeeping, billing and using a web browser and multiple tabs to record time for multiple clients when a professional is switching back and forth between projects. It is useful for billing, accounting and auditing. More than one user can log into the system on a computer and track time her or his time on the same computer. It also teaches the use of subtabs to track time. A stop watch type button is used to switch on and off the time tracking, or time is tracked as the user switches browser windows.

In US 20140201138 A1 is disclosed a system and method regarding the functionalities, features, and user interface of a synchronization client to a cloud-based environment. The disclosure describes a method to keep different versions of documents synchronized between the local device and the cloud-computing environment. Embodiments of the prior art include systems and methods for a synchronization client that is connected with a collaboration environment including a cloud-based environment and runs on a client device such as an iPad.

In reviewing the prior art, there is disclosed in US 2013008062A1, a method and system for the management of professional services project information. Disclosed in the prior art is a method for improving the accessibility and transferability of various data or information resources used in the management of a business. In one embodiment of the prior art, is a computer network for managing a business, consisting of a computer network, CPU and processor and one or more distributed application means, data cooperating with said one or more distributed applications means, and data storage means, and project management database means cooperating with one or more distributed application means for facilitating the transfer of said data from said one or more distributed application means.

Further, U.S. Patent No. 20110054968 A1, Galaviz discloses a system for continuous performance improvement. The prior art discloses a management approach to employee productivity and quality assurance to clients. In one embodiment of the prior art is a computer-implemented method for continuous performance improvement, the method includes providing visibility of project documentation and allows for collaboration and version control for the project documentation, this is done over aweb-based workspace.

Similarly, in U.S. Patent No. 20140095539 A1, Smit et al. discloses, a system and method for asynchronous client server session communication. The prior art provides a system that offers a highly effective solution to the aforementioned disadvantages of both client-server and Internet systems by providing a way to synchronize the data entered on a client system with the data on a server. Data input by the client are transferred to the server, and the server updates the clientdisplay. A plurality of servers can be used to serve a number of static or dynamic sources. Data can also be presented to a client without user input, meaning the data are automatically pushed to the client. This enables a client component to display the data immediately, or to transmit the data to another program to be handled as required.

Thus, nowhere in the prior is seen a billing system which uses at least the following client information for billing and dunning purposes in a professional company or firm: client name, nickname, physical address, street address, websites, fax numbers, phone numbers, emails, etc. and which tracks write offs or courtesy credits on bills, and in addition provides security levels according to the employee using the system, or the staff level using the system. The billing system may also link related companies (parent, sibling, child) and track mergers and acquisitions ofclients.

### Summary of the Invention

The present invention consists of an improved client entry and maintenance system for a timekeeping and billing system wherein a client may be entered into the system with greater flexibility and information than ever before. In the present invention, Improved Client Entry System and Method, the user may create a Client Account by entering in: client name, client nickname, physical address(s), website address(es), phone number(s), fax number(s), cell phone numbers for bill contact, the primary billing language, the primary dunning language, method of dunning, bill cycle information, primary currency, etc. The Improved System and Method will also have the flexibility of allowing the user to select multiple currencies which may be displayed to the user in a bill, and it may translate the bill into multiple languages. In addition the user can specify during client set up, the Improved System will capture any client tax ID information, tax rates-national, regional and local and the type of legal entity for the client being processed-individual, corporation, partnership, LLC, NFP and other corporation types found locally and around the globe.

Matter intake is a key process in legal and other professional industries and could pertain to a New Matter for a New Client, or a New Matter for an existing Client, or adding a Phase or additional work for an existing matter. Also important to the process are possible conflict checks for a New Matter, and security features may be provided regarding who is able to enter or view Time by Employee Name, Title, Job or Department. Also, the Client or firm can select one or more currencies for billing and timekeeping purposes. Time is also subject to budgeting, blending and capping. Itcan also be agreed between the client and Firm to provide a tax override where the Firm pays taxes, the System will allow multiple payers for bills, it will allow segmentation of matters by practice groups, Regional, Local, National orGlobal.

In addition, corporate entities can be set up as individual clients but linked to one another, such as sibling corporations, parent corporations and their divisions. Bills can then be generated individually, or in groups according to the groupings of the clients, such as parent and child corporations, all sibling corporation, all divisions of a particular corporation. In addition, bills can be sent to all sibling corporation, but the parent corporation can be presented with a bill for the parent which includes copies of all children corporations.

At this point, the client set up may including setting up a preferred payment set up and billing system. For example, bills may be run weekly, bi weekly or monthly for certain corporations. The terms may be net 10 days from presentment, 20 or 30 without incurring a penalty or interest. The interest rate for default may be selected by the user, or a default rate may be chosen which escalates the longer the outstanding balance is due. The user at that point may be able to choose the preferred sort type for bills, by date and then by Timekeeper, or by Timekeeper and then date, or by various Matters chosen, or different activities such as litigation, transaction or type of legal field.

The improved System will be able to create multiple billing addresses in multiple languages and then associate them with particular matters and clients. The Improved System and Method will also be able to create different bills and bill sorts for the Client than for the Payer. The system will also be able to assign a percentage of a bill to different Payers. This is helpful when one attorney represents several Plaintiffs or Defendants and they have decided to split a litigation bill among them in differing ratios or percentages.

The system will have the flexibility to tax code according to matters, e.g., litigation may be billed out with a different tax code than wills and trusts. The Inventive System and Method will also have security levels so that different portions of client information may be seen by different level staff, or by particular individuals privy to that information.

The system will be able to tag Clients as Open, Closed or Declined, and the System will allow the user to set a designation of "Other" when appropriate and permitted by the system. The System will be able to capture a copy of the Fee Arrangement or other initial contract with the Client that determines fee payment and payment arrangements. The System and Method will be able to capture the start date or effective date of the first work performed for any Client and the last date or when the client was terminated or Closed on the System.

The System will be able to capture a client and run that client through the conflicts check, flag all conflicts and automatically notify all involved parties sothat the conflict may be waived, if at all possible. The System will also be able to apply mass discounts to groups of bills by Matter, by client name or type, by Task or Activity, etc. The Improved System at the time of set upcan assign the billing work to a Billing Coordinator, a Local Client Intake Reviewer, a Shared Services Center-Matter Management Coordinator and a Local Office Managing Partner.

The Improved System will be able to run client reports, address reports, email address reports-for the global distribution of information to the billing partner for use on holiday cards, thank you cards, newsletters of appropriate interest and other matters necessary to client information, marketing and retention.

The Improved System will allow the user to capture effective dates and information set for: Billing Partner, Matter Management Attorney, Non Local Lead Attorney, Credit Arrangement Code, task based billing data, Supervising Partner and Client Originating Attorney or Firm Client.

For a new attorney being entered into the System, the Improved System will be able to capture prior courtesy credits provided to the client and keep that accounting separate from new courtesy credits provided by the newfirm.

The system will be able to export and import data from other locations and to combine clients by acquisition and merger. The system will be able to transfer a local office's billing and merge it into a regional system, or clients at the regional level maybe spun off and exported to a local office.

The system may handle pro bono work as either courtesy credit to indigent clients and NFP's (not for profit corporations), or it may be flagged to set up all work as "do not bill" or "non billable", as desired by the user and management of the System. The System will be able to run pro bono bill reports, "do not bill" reports and "non billable" reports as selected by the user thereof. The courtesy credit summary will never be zeroed out by the system, but the System may provide a listing of courtesy credits given by month or by year to the user thereof. The System may be able to keep track of a Matter Open date as well as a Matter Creation date wherein the Matter Open date may be set earlier than the Matter Creation date.

Although the foregoing summary has set forth specific embodiments of the present invention, numerous other additions and substitutions may be found to be common in the prior art and obvious to try shall be included in the above summary as if set forth fully herein.

According to one aspect, there is provided an improved System for Client Data Entry and Maintenance comprising: a CPU and data storage unit; the entry of at least one or more of the following Client Data: Name, Nickname, physical Address, Website Address, Phone numbers, Fax Numbers, Cell Phone Numbers and Work Office locations, the improvement comprising the further entry of at least one client preferred language for billing; and at least one client preferred language for dunning.

According to one embodiment, the improved System for Client Data Entry and Maintenance further comprises comprising the entry of the client business type selected from one of the following; corporation, partnership, limited liability corporation, professional corporation and not for profit.

According to one embodiment, the improved System for Client Data Entry and Maintenance further comprises the entry of multiple related corporations, and the entry of abusiness association type for the multiple related corporations selected from one of the following: parent, child, sibling, subsidiary, division and holding corporation.

According to one embodiment, the improved System for Client Data Entry and Maintenance further comprises the entry of at least two different bill payers, and the entry of a percentage of the bill which is assigned to each bill payer.

According to one embodiment, the improved System for Client Data Entry and Maintenance further comprises the entry of a security level for each client according to the type of company employee of the user selected from at least one of the following: partner, billing partner, billing manager, partner, associate or staff wherein the client Data may be viewed only by those employees granted access according to their set security level.

According to one embodiment, the improved System for Client Data Entry and Maintenance further comprises the entry of one of the following status tags: open, closed or declined.

According to one embodiment, the improved System for Client Data Entry and Maintenance further comprising the entry of at least one of the following data: Work Type, Activity, Legal Area, Matter and Task.

According to one embodiment, the improved System for Client Data Entry and Maintenance further comprises the entry of a mass discount which is applied to at least one client according to at least one of the following: Client Name, Work type, Activity, Legal Area, Matter or Task.

According to one embodiment, the improved System for Client Data Entry and Maintenance further comprises the scanning and storage of one or more of the following document types: retainer agreement, fee agreement, flat fee agreement and contingency fee agreement.

According to a further aspect, there is a provided an improved System for Client Data Entry and Maintenance comprising: a CPU and data storage unit; the entry of one or more of the following client data: name, nickname, address, phone; providing a client with at least two bills for services rendered; providing at least two discounts on two or more bills for services rendered; summing all the discounts which have been given to a client and displaying the sum on the most recent bill.

According to a further aspect, there is provided an improved Method for Client Data Entry and Maintenance comprising providing a CPU and data storage unit; entering at least one or more of the following Client Data: Name, Nickname, physical Address, Website Address, Phone numbers, Fax Numbers, Cell Phone Numbers and Work Office locations; the improvement comprising: entering at least one client preferred language for billing and at least one preferred client language for dunning.

According to one embodiment, the improved Method for Client Data Entry and Maintenance further comprises the step of entering the client business type from at least one ormore of the following: corporation, partnership, limited liability corporation, professional corporation and not for profit.

According to one embodiment, the improved Method for Client Data Entry and Maintenance further comprises the step of entering multiple related corporations and entering a business association type for the multiple related corporations selected from one of the following: parent, child, sibling, subsidiary, division and holding corporation.

According to one embodiment, the improved Method for Client Data Entry and Maintenance further comprises: entering at least two different bill payers, and entering a percentage of the bill which is assigned to each bill payer.

According to one embodiment, the improved Method for Client Data Entry and Maintenance further comprises: entering a security level for each client according to the type of company employee of the user selected from at least one of the following: partner, billing partner, billing manager, partner, associate or staff wherein the client Data may be viewed only by those employees granted access according to their set security level.

According to one embodiment, the improved Method for Client Data Entry and Maintenance further comprises the step of entering at least one of the following tags: open, closed or declined.

According to one embodiment, the improved Method for Client Data Entry and Maintenance further comprises entering at least one of the following data: Work Type, Activity, Legal Area, Matter and Task.

According to one embodiment, the improved Method for Client Data Entry and Maintenance further comprises the step of entering a mass discount which is applied to at least one client according to at least one of the following: Client Name, Work Type, Activity, Legal Area, Matter orTask.

According to one embodiment, the improved Method for Client Data Entry and Maintenance further comprises scanning in and storing one or more of the following documenttypes: retainer agreement, fee agreement, flat fee agreement and contingency fee agreement.

According to one embodiment, the improved Method for Client Data Entry and Maintenance further comprises: providing a CPU and data storage unit; entering one or more of the following client data: name, nickname, address, phone; providing a client with at least two bills for services rendered; providing at least two discounts on two or more bills for services performed; summing all the discounts received by a client and then displaying them on the most recent bill for the client.

### Objects of the Invention

Thus, it is one primary object of the present invention to provide an improved Client Entry and Maintenance System and Method for timekeeping and billing purposes wherein the following data may be entered into the System by the User thereof: client name, client nickname, physical address(es), website address(es) phone number(s), fax number(s), cell phone numbers for bill contact, the primary billing language, the primary dunning language, preferred method(s) for dunning, bill cycle information and primary currency.

It is yet a further primary objection of the present invention to provide an improved Client Entry and Maintenance System and Method for timekeeping and billing purposes wherein the System may display and track multiple languages and currencies for Client Information as well as multiple taxes which are applicable to the Client'sbill.

An additional primary objection of the present invention is to provide an improved Client Entry and Maintenance System and Method for timekeeping and billing purposes wherein the System will have a mechanism to translate into additional languages any description for a bill or billing format.

Still a further primary objection of the present invention to provide an improved Client Entry and Maintenance System and Method for timekeeping and billing purposes wherein the System will keep track of the type of entity for both Payer and Client, including, but not limited to: individual, corporation, partnership, LLC, PC, NFP and other corporation types commonly found in the marketplace both locally and worldwide.

Still a further primary object of the present invention to provide an improved Client Entry and Maintenance System and Method for timekeeping and billing purposes wherein the System will keep track and maintain all types of linked and associated corporations such as parent corporations, sibling corporations, holding companies, divisions, etc. as well as mergers and acquisitions and the date of same.

An additional primary objection of the present invention to provide an improved Client Entry and Maintenance System and Method for timekeeping and billing purposes wherein the System may utilize multiple billing addresses (physical and /or email) and associate them with particular Clients and Payers.

Yet an additional primary objection of the present invention to provide an improved Client Entry and Maintenance System and Method for timekeeping and billing purposes wherein the System may assign different percentages of a bill by Client or by Matter to multiple Payers.

A further primary objection of the present invention to provide an improved Client Entry and Maintenance System and Method fortimekeeping and billing purposes wherein the System may assign security levels to Client information either by the staff level involved (partner, billing partner, managing partner, associate, paralegal, etc.), ora security level may be selected by the employee's name oridentity.

Still a further primary objection of the present invention to provide an improved Client Entry and Maintenance System and Method for timekeeping and billing purposes wherein the System may provide tax coding to the Client information according to Matter or Activity. For example, litigation may have a different tax format than transactional work such as preparing contracts and agreements, etc.

An additional primary objection of the present invention to provide an improved Client Entry and Maintenance System and Method for timekeeping and billing purposes wherein the System may tag a client as Open, Closed or Declined for the purposes of billing any fees or disbursements. A disbursement is defined herein as any soft cost charges, such as copies, fax, phone, etc.

Still a further primary objection of the present invention to provide an improved Client Entry and Maintenance System and Method for timekeeping and billing purposes wherein fields will be provided for lists of current and past clients for all attorneys at a firm for the purposes of a conflicts check. A Client may be tagged as Open for conflicts and if a conflict is flagged, both attorneys are notified and the client is placed on hold until the issue is either resolved or the Client is marked "declined due to conflict."

A further primary objection of the present invention to provide an improved Client Entry and Maintenance System and Method fortimekeeping and billing purposes wherein mass discounts to bills may be applied according to Client, Task, Activity, Matter or Legal Area. In such a manner, the Firm or Company can flexibly promote more profitable legal areas over other areas.

Yet an additional primary objection of the present invention to provide an improved Client Entry and Maintenance System and Method for timekeeping and billing purposes wherein the System is able to capture and store a copy of Fee Arrangements, Billing Agreements, Retainer Agreements, Contingency Agreements and all other agreements pertinent to billing, collection and fees.

Still a further primary objection of the present invention to provide an improved Client Entry and Maintenance System and Method for timekeeping and billing purposes wherein the System will be able to provide mass discounts to the client according to one or more of the following: Client Name, Client Type, Activity, Legal Area, Matter and Task.

An additional primary objection of the present invention to provide an improved Client Entry and Maintenance System and Method for timekeeping and billing purposes wherein any company employee will be able to run Client Address Reports for marketing and other purposes such as holiday cards, thank you cards, newsletters and the like.

Yet a further primary objection of the present invention to provide an improved Client Entry and Maintenance System and Method for timekeeping and billing purposes wherein the System will be able to capture at set up, information regarding the client's Billing Partner, Managing or Supervising Partner, Non Local Counsel, Local Counsel, Of counsel, Credit Arrangement Code, Task based billing data, Client Originating Attorney or Firm Client.

Still a further primary objection of the present invention to provide an improved Client Entry and Maintenance System and Method for timekeeping and billing purposes wherein the System will be able to export and import the above Client Data from other company or firm locations and to combine client by acquisition and merger, or itmay transfer a local office's client records and merge them into a regional system, or it may split up or spin off regional client data to city or local offices.

Yet an additional primary objection of the present invention to provide an improved Client Entry and Maintenance System and Method fortimekeeping and billing purposes wherein the System will track courtesy credits or write offs according to time period granted, either by month or by year, etc.

These and other objects and advantages of the present invention can be readily derived from the following detailed description of the drawings taken inconjunction with the accompanying drawings present herein and should be considered as within the overall scope of the invention.

### Brief Description of the Drawings

Figure 1 is a Flow Chart of the present inventive system, Improved Client Entry and Maintenance System and Method for Timekeeping and Billing.
Figure 2 is a Screenshot of the present invention, Improved Client Entry and Maintenance System and Method for Timekeeping and Billing.
Figure 3 is a Screenshot of the present invention, Improved Client Entry and Maintenance System and Method for Timekeeping and Billing.
Figure 4 is a Screenshot of the present invention, Improved Client Entry and Maintenance System and Method for Timekeeping and Billing.

### Detailed Description of the Drawings

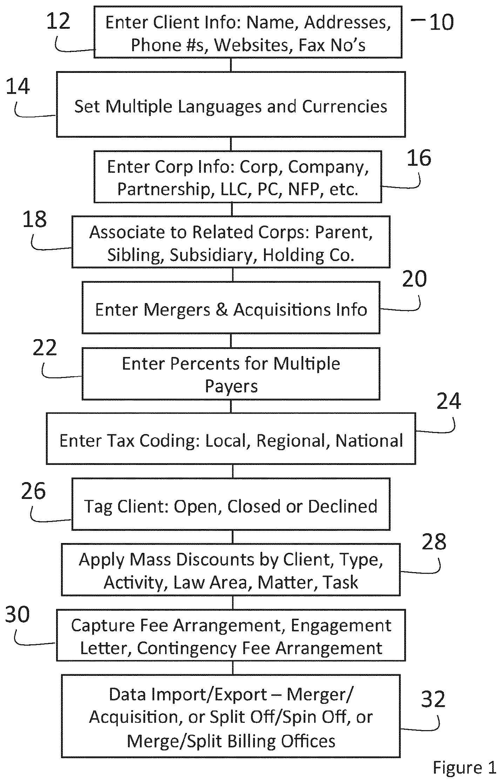

Shown now in Figure 1 is a flow chart of the present invention, Improved Client Entry and Maintenance System and Method 10 which initiates the process by providing a plethora of client information comprising: client name, nickname, physical addresses, phone numbers, websites, fax numbers, social media identifiers on Facebook, Twitter, Pinterest, etc. Next, Improved Client Entry and Maintenance System 10 will ask the user thereof to set one or more languages for billing and dunning communications, as well as set up one or more currencies which the client will be paying the bill in 14. Then the present improved System and Method will store the type of entity the new client is, namely, an individual, corporation, company, partnership, LLC, PC, NFP, etc. The next step to set up a client, is to enter any corporations or businesses which the new client may be associated with and store the type of association, namely, if the new client is a parent corporation, asibling corporation, a subsidiary, holding company, etc.

The next task is to note any merger and acquisitions information regarding the company 20, such as the date of a merger, the entities merged and so forth. The following step is to enter the percentages which multiple Payers will pay when entered into the present Inventive System 10. In many litigation cases, multiple entities such as plaintiffs or defendants may share a bill. The present inventive System and Method will automatically apply the desired percentages to the bill and then mail or otherwise transmit a bill to multiple clients sharing litigation or other expenses.

The next step is then to enter any tax coding such as taxes on the local level, the county level and state level and then national level 24. The following step is to code a client as open, closed or declined 26. The present inventive System 10 will automatically run and store a list of former clients for every attorney so that a conflicts check may be run with each new client added to the System 10. If a formeror current client may be an adversary in a new client to be added to the System 10, a notice will be generated to all attorneys involved so that they may be able to work out any conflicts. However, if they do not, the new client will be tagged as declined due to conflict 26 and that will be noted in System 10.

The present inventive system 10 will also be capable of applying mass fee discounts according to one or more categories of client: the name, type of client, activity, law area, matter and task 28. In addition, the present inventive System 10 will be able to capture the various types of fee agreements possible with a client, namely, engagement letters, fee agreements for various tasks and matters, contingencyfee agreement for litigation, etc. 30. Another step which the present inventive System 10 makes possible is to automatically import or export client data and information during mergers and acquisitions of new law firms, or split offs and spin offs of firms, or when billing offices are changed or merged 32. In such a manner, if individual cities are performing their own billing functions, it might be possible to combine those activities by automatically transferring data to one central office. Or if one central office is conducting billing activities but is low on staff, the data might be transferred backto individual cities to conduct billing activities for a period oftime.

Clients may be grouped by DUNS number, client type, global activities and client groupings. Various types of Reports may be run by the system, including Client reports and Matter listings. In addition, the present inventive System is highly efficient in that it is able to load 250k clients in under 0.4 hours. Improved speed in conversion and data migration is also seen in the present inventive System 10 with the ability to load 2.0 million Matters in under 96 hours. Of course, all new Matters must be associated with a Billing Partner or Client Originating Partner for the purposes of profit sharing among partners. In addition, it is helpful to code clients with a Managing Partner and staff associated with handling the Client, such as a secretary, paralegal, billing coordinator and other staff essential to Client handling.

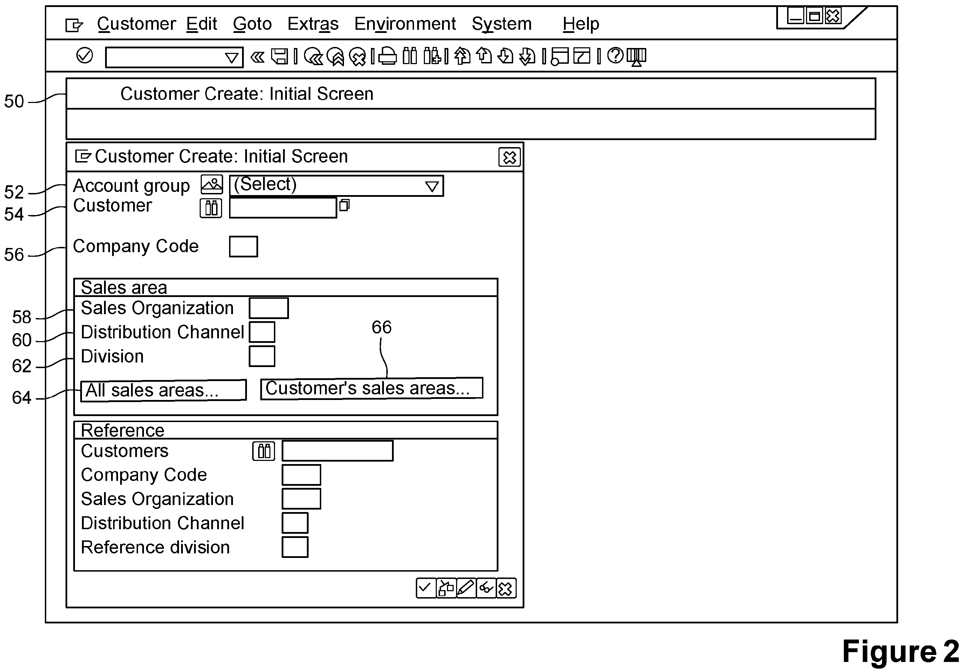

Figure 2 shows a screenshot of the present invention, System 10 with a Customer Create Initial Screen 50 showing how a new client is entered into Account Group 52, it is then assigned a Customer ID or code 54, then it is assigned a Company Code 56, a Sales Organization identifier 58, a Distribution Channel 60 and a Division code 62. In addition, there are provided click on bars to go to All Sales Areas 64 and the Customer's Sales Areas 66. The Account Group describes in which account group the client is made available. The Customer field 54 contains the Client encoding. The company Code 56 describes the Organization unit. The Sales Organization 58 sets forth who is responsible for sales. The Distribution channel 60 describes from where the goods are delivered to the Client and the Division 62 sets forth to which sales area the sales may be attributed to.

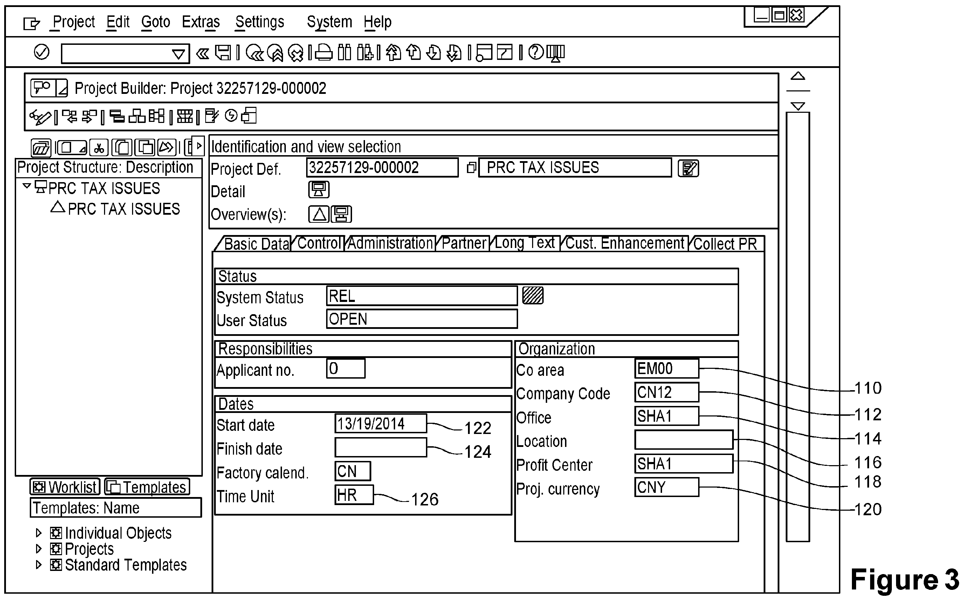

Figure 3 shows a screenshot of the present invention, System 10, showing the Project Builder Screen 100 having a Project Definition encoding 102, a tax coding or category 104, a system status category 106, a User Status 108 of open, a Start Date 122 for the Project chosen, a Finish Date 124 for the Project, and the Time Units 126 for that Project. Also shown are the CO area 110, the Company Code 112, the Office Code 114, the Office Location 116, the Profit Center 118 and the type of currency for the Project 120. The Project Definition 102 contains an unique number for the Project. The System status 106 displays the current status of the Matter. The Start Date 122 indicates when the Matter began, and the Finish Date 124 will indicate the day the Matter is closed. The CO area 110 indicates in which controlling area the matter belongs to. The Company Code 112 indicates to which company the Matter belongs to. The Office Code 114 indicates to which Office the Matter belongs to. The profit Center 118 indicates to which Profit Center the Matter has been assigned to and the Project Currency 120 indicates the type of currency for billing and payment is preferred by the Client.

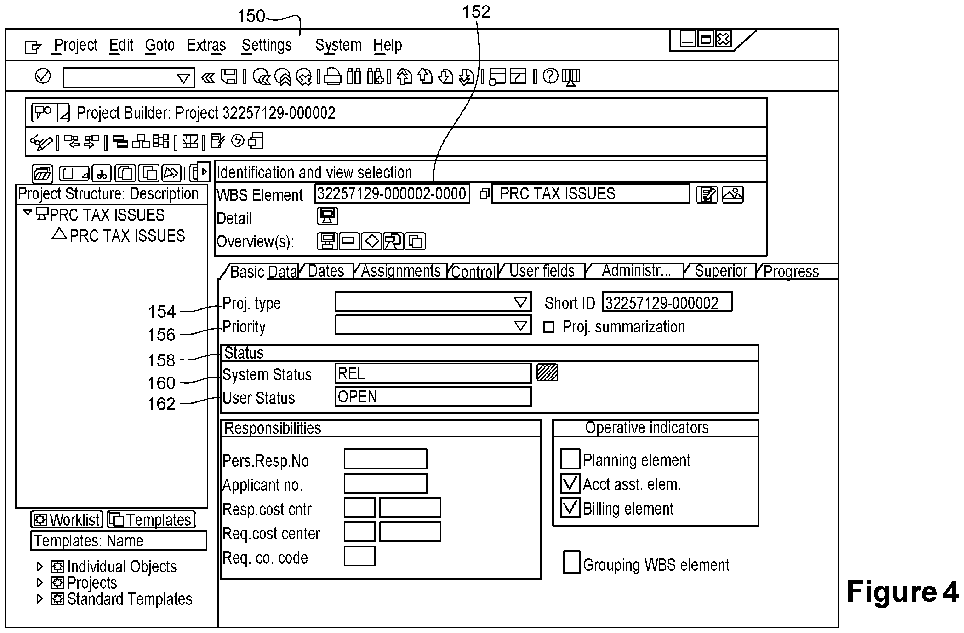

Figure 4 shows yet an additional screenshot 150 for a particular Project, having a WBS Element 152, a Project Type Code selector of 154, a Priority Sector of 156, a Status Bar 158, and a System Status code 160 for the Project and a User Status 162 for the Project Selected. A WBS Element describes which Phase a particular matter is in.

The present invention, while directed to Firms and Companies, is easily adapted to be used by a wide variety of business types, including, but not limited to: corporations, business ventures, partnerships, organizations, NFP's (not for profits), LLC's, PC's, Swiss Vereins, GmbH and all other types of methods for organizing businesses.

Although in the foregoing detailed description the present invention has been described by reference to various specific embodiments, it is to be understood that modifications and alterations in the structure and arrangement ofthose embodiments other than those specifically set forth herein may be achieved by those skilled in the art and that such modifications and alterations are to be considered as within the overall scope of this invention.

## Claims

1. A device configured to manage client data, the device comprising:
a data storage unit; and
a CPU programmed to perform the following:
receive, via a firm or company providing a billable good or service, at a time when a new client account is created and prior to transmission of a bill according to the new client account, client identification data corresponding to a client;
receive, via the firm or company providing the billable good or service, at the time when the new client account is created and prior to transmission of the bill according to the new client account, identification of at least two different bill payers for the new client account and corresponding information designating percentages of bills to be paid by the at least two different bill payers;
receive, via the firm or company providing the billable good or service, at the time when the new client account is created and prior to transmission of the bill according to the new client account, an indication of at least one preferred language for billing associated with the new client account;
receive, via the firm or company providing the billable good or service, at the time when the new client account is created and prior to transmission of the bill according to the new client account, an indication of at least one preferred language for dunning associated with the new client account;
create, via the firm or company providing the billable good or service, at the time when the new client account is created and prior to transmission of the bill according to the new client account, a client record associated with the client, the client record comprising the at least one preferred language for billing, the at least one preferred language for dunning, the identification of the at least two different bill payers, and the information designating percentages of bills to be paid by the two different bill payers;
apply, via the firm or company providing the billable good or service, a mass discount to a group of bills by matter, client name or type, task, activity or legal area; and
send bills for the billable good or service to the at least two different bill payers, using the at least one preferred language for billing, according to the percentages of bills to be paid by the two different bill payers.

2. The device of claim 1, the CPU being further programmed to:
perform a conflict search based on the client associated with the client record and at least one previous or current client; and
when the conflict check results in a determination that the at least one previous or current client is adverse to the client associated with the client record, send a notice of conflict to an attorney associated with the client.

3. In a device comprising a CPU in communication with a data storage unit, a method for managing client data, the method comprising:
receiving, by the CPU associated with a firm or company providing a billable good or service, at a time when a new client account is created and prior to transmission of a bill according to the new client account, client identification data corresponding to a client;
receiving, by the CPU associated with the firm or company providing the billable good or service, at the time when the new client account is created and prior to transmission of the bill according to the new client account, identification of at least two different bill payers for the new client account and corresponding information designating percentages of bills to be paid by the at least two different bill payers;
receiving, by the CPU associated with the firm or company providing the billable good or service, at the time when the new client account is created and prior to transmission of the bill according to the new client account, an indication of at least one preferred language for billing associated with the new client account;
receiving, by the CPU associated with the firm or company providing the billable good or service, at the time when the new client account is created and prior to transmission of the bill according to the new client account, an indication of at least one preferred language for dunning associated with the new client account;
creating, by the CPU associated with the firm or company providing the billable good or service, at the time when the new client account is created and prior to transmission of the bill according to the new client account, a client record associated with the client, the client record comprising the at least one preferred language for billing, the at least one preferred language for dunning, the identification of the at least two different bill payers, and the information designating percentages of bills to be paid by the two different bill payers;
applying, via the firm or company providing the billable good or service, a mass discount to a group of bills by matter, client name or type, task, activity or legal area: and
sending, by the CPU, bills for the billable good or service to the at least two different bill payers, using the at least one preferred language for billing, according to the percentages of bills to be paid by the two different bill payers.

4. The method of claim 3, further comprising:
performing, by the CPU, a conflict search based on the client associated with the client record and at least one previous or current client; and
when the conflict check results in a determination that the at least one previous or current client is adverse to the client associated with the client record, sending, by the CPU, a notice of a conflict to an attorney associated with the client.
